(19) **Europäisches Patentamt / European Patent Office / Office européen des brevets**

(11) **EP 2 105 724 B1**

(12) **EUROPEAN PATENT SPECIFICATION**

(45) Date of publication and mention of the grant of the patent:
**27.02.2019 Bulletin 2019/09**

(51) Int Cl.:
***G01N 15/14*** *(2006.01)*   ***G01N 35/00*** *(2006.01)*

(21) Application number: **09156134.0**

(22) Date of filing: **25.03.2009**

(54) **Biological sample analyzer and computer program product**

Analysegerät für biologische Proben und Computerprogrammprodukt

Analyseur d'échantillons biologiques et produit de programme informatique

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.03.2008   JP 2008088828**
**28.03.2008   JP 2008088825**
**28.03.2008   JP 2008088826**

(43) Date of publication of application:
**30.09.2009   Bulletin 2009/40**

(73) Proprietor: **Sysmex Corporation**
**Kobe-shi, Hyogo 651-0073 (JP)**

(72) Inventors:
• **Nagai, Takaaki**
 **Hyogo 651-0073 (JP)**
• **Ikeda, Yutaka**
 **Hyogo 651-0073 (JP)**
• **Narisada, Noriyuki**
 **Hyogo 651-0073 (JP)**

(74) Representative: **Hoffmann Eitle**
**Patent- und Rechtsanwälte PartmbB**
**Arabellastraße 30**
**81925 München (DE)**

(56) References cited:
**EP-A2- 1 033 573     JP-A- H0 627 117**
**US-B1- 6 391 263**

**Description**

FIELD OF THE INVENTION

The present invention relates to a biological sample analyzer and computer program product for analyzing biological samples such as blood, urine and the like from a human patient.

BACKGROUND

Conventional sample analyzers for analyzing biological sample such as blood and urine are disclosed, for example, in U.S. Patent No. 6,391,263 and Japanese Laid-Open Patent Publication No. 2003-083960.

A sample analyzer which allows the analysis condition to be modified according to animal species is disclosed in U.S. Patent No. 6,391,263.

A blood analyzer which measures blood after diluting the blood with a reagent to increase the amount, and thereafter performs a calculation process to correct for the additional amount, when it is difficult to collect a sufficient amount of blood as in the case of a child, and when analyzing a sample which has an abnormally number of blood cells, is disclosed in Japanese Laid-Open Patent Publication No. 2003-083960.

Since sample attributes vary widely depending on the animal species when samples are collected from animals other than humans, analyzers have been developed which execute sample analysis after changing the analysis condition according the animal species as in the previously mentioned case of U.S. Patent No. 6,391,263.

Because sample attributes do not vary much according to the patient when samples are collected from humans, there is no need to change the analysis condition depending on the sample. However, ever greater analysis precision has come to be required by analyzers over the years, and conventional analyzers may not meet such requirements.

For example, the blood analyzer disclosed in Japanese Laid-Open Patent Publication No. 2003-083960 performs measurements of blood which may be of insufficient quantity such as blood collected from a child under conditions which correspond to the attributes of adult human blood after having increased the quantity of the blood by diluting the blood more than usual, and cannot perform such measurements under condition which correspond to the attributes of child humans. Therefore, it is difficult to perform precision analysis in accordance with a full range of human attributes using the blood analyzer disclosed in Japanese Laid-Open Patent Publication No. 2003-083960.

SUMMARY

A first aspect of the invention is a biological sample analyzer according to independent claim 1.

A second aspect of the present invention is a computer program product for enabling a computer to control a biological sample analyzer according to independent claim 15.

BRIEF DESCRIPTION OF THE DRAWINGS

FIG. 1 is a perspective view schematically showing the structure of the biological sample analyzer of a first embodiment of the present invention;

FIG. 2 is a block diagram showing the structure of the measuring device of the biological sample analyzer of the first embodiment of the present invention;

FIG. 3 is a block diagram schematically illustrating the structure of the sample preparing section of the first embodiment of the present invention;

FIG. 4 is a block diagram schematically illustrating the structure of the detecting section and the analog processing section of the first embodiment of the present invention;

FIG. 5 is a block diagram showing the structure of the operation display device of the biological sample analyzer of the first embodiment of the present invention;

FIG. 6 shows an example of the data structure of the age information storage section;

FIG. 7 shows an example of a scattergram produced by the leukocyte classification measurement (DIFF measurement);

FIG. 8 shows an example of the relationship between sampling values and lymphocyte distribution region in the scattergram produced by the DIFF measurement;

FIG. 9 is a flow chart showing the CPU processing sequences of the operation display device and controller of the control board of the measuring device of the first embodiment of the present invention;

FIG. 10 is a flow chart showing the child blood analysis processing sequence of the CPU of the operation display device of the first embodiment of the present invention;
FIG. 11 shows an example of a measurement data operation processing result;
FIG. 12 is a flow chart showing the CPU reanalysis processing sequence of the operation display device of the first embodiment of the present invention; and
FIG. 13 is a flow chart showing the CPU processing sequences of the operation display device and controller of the control board of the measuring device of a second embodiment of the present invention.

DETAILED DESCRIPTION OF THE EMBODIMENT

A blood analyzer for analyzing blood is specifically described hereinafter as an example of the biological sample analyzer of the present embodiment based on the drawings. The analysis process thus is a blood cell classification process, and the analysis data are generated as classification data. Note that the blood analyzer of the present embodiment is configured to analyze blood of human beings .

[First Embodiment]

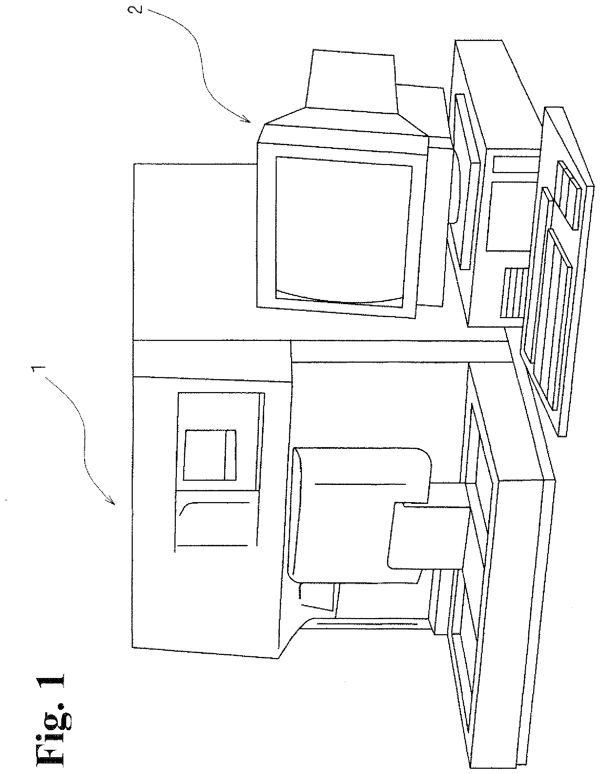

FIG. 1 is a perspective view schematically showing the structure of the first embodiment of the biological sample analyzer of the present invention; As shown in FIG. 1, the biological sample analyzer of the first embodiment is configured by a measuring device 1, and an operation and display device 2 which is connected to the measuring device 1 so as to be capable of data communication therewith.

The measuring device 1 and the operation and display device 2 are connected via a communication line which is not shown in the drawing. The operation and display device 2 controls the operation of the measuring device 1, processes the measurement data output from the measuring device 1, and obtains analysis results through data communication with the measuring device 1. The measuring device 1 and the operation and display device 2 may also be connected over a network, or may be configured as a single integrated device so as to send and receive data by interprocess communication and the like.

The measuring device 1 detects characteristics information of the leukocytes, reticulocytes, and platelets in the blood using flow cytometry, and transmits the detection data as measurement data to the operation and display device 2. Flow cytometry is a measurement method which forms a sample flow that includes a measurement sample, detects light such as forward scattered light, side scattered light, and side fluorescent light that is emitted by the particles (blood cells) in the measurement sample when the measurement sample is irradiated by laser light to detect the particles (blood cells) in the measurement sample.

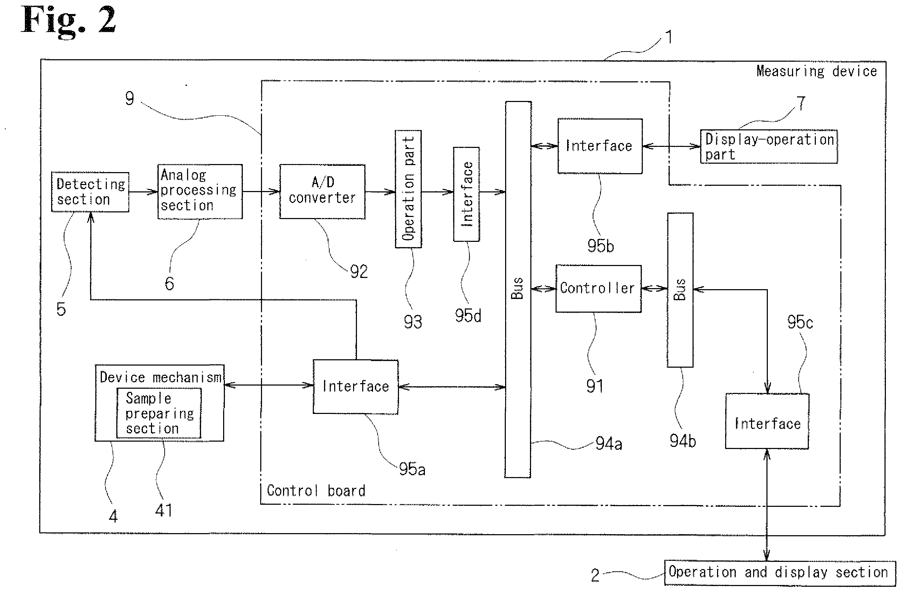

FIG. 2 is a block diagram showing the structure of the measuring device 1 of the biological sample analyzer of the first embodiment of the present invention. The measuring device 1 is provided with a device mechanism 4, detecting section 5 for executing the measurement of a measurement sample, an analog processing section 6 for processing the output of the detecting section 5, display and operation section 7, and control board 9 for controlling the operation of the various hardware.

The control board 9 is provided with a controller 91 which has a control processor and a memory for the operation of the control processor, twelve-bit A/D converter 92 for converting the signals output from the analog processing section 6 to digital signals, And an operation section 93 for storing the digital signals output from the A/D converter 92 and executing a process for selecting data to be output top the controller 91. The controller 91 is connected to the display and operation section 7 through a bus 94a and an interface 95b, connected to the device mechanism 4 through the bus 94a and an interface 95a, and connected to the operation and display device 2 through a bus 94b and an interface 95c. The operation section 93 outputs the operation results to the controller 91 through an interface 95d and the bus 94a. The controller 91 also transmits the operation results (measurement data) to the operation and display device 2.

The device mechanism 4 is provided with a sample preparing section 41 for preparing a measurement sample from blood and reagent. The sample preparing section 41 prepares leukocyte measurement samples, reticulocyte measurement samples, and platelet measurement samples.

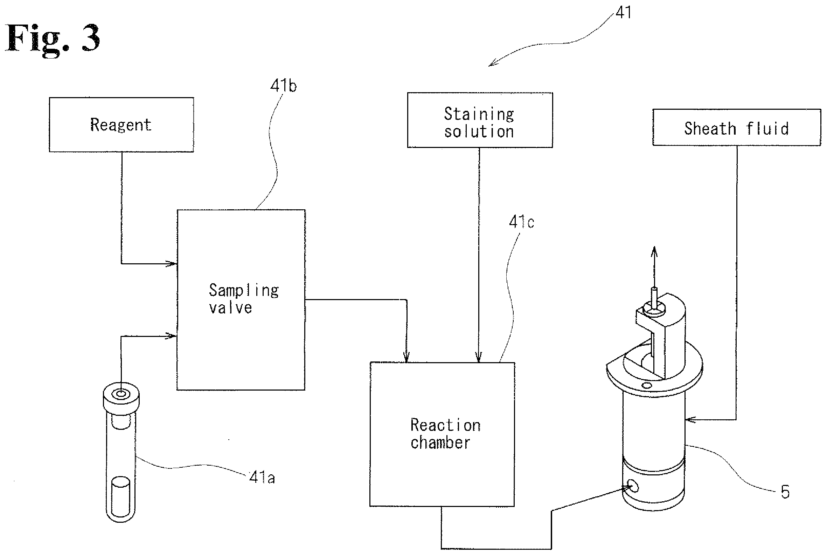

FIG. 3 is a block diagram schematically illustrating the structure of the sample preparing section 41 of the first embodiment of the present invention. The sample preparing section 41 is provided with a collection tube 41a to be filled with a predetermined amount of blood, sampling valve 41b for aspirating the blood, and a reaction chamber 41c.

The sampling valve 41b is configured to be capable of determining the amount of blood within the collection tube 41a aspirated by an aspirating pipette which is not shown in the drawing. The reaction chamber 41c is connected to the sampling valve 41b, and is configured to be capable of mixing a predetermined reagent and staining solution with the fixed amount of blood determined by the sampling valve 41b. The reaction chamber 41c is also connected to the detecting section 5, and is configured so that a measurement sample prepared by mixing the predetermined reagent and staining solution in the reaction chamber 41c inflows to the detecting section 5.

The sample preparing section 41 can thus prepare a measurement sample in which the leukocytes are stained and the erythrocytes are hemolyzed as the leukocyte measurement sample. The sample preparing section 41 can also prepare a measurement sample in which the reticulocytes are stained as a reticulocyte measurement sample, and prepare a measurement sample in which the platelets are stained as a platelet measurement sample. The prepared measurement sample is supplied together with a sheath fluid to a sheath flow cell of the detecting section 5 which will be described later.

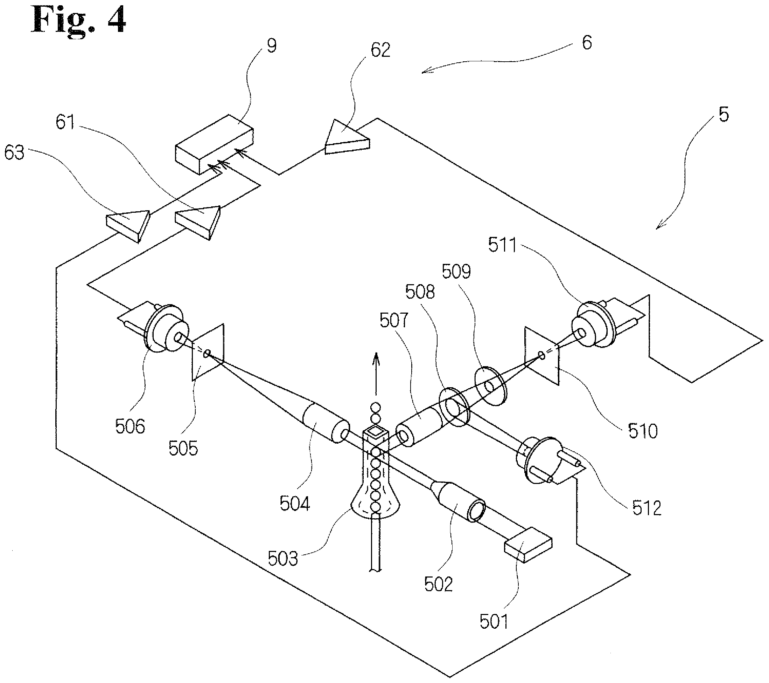

FIG. 4 is a block diagram schematically showing the structure of the detecting section 5 and the analog processing section 6 of the first embodiment of the present invention. As shown in FIG. 4, the detecting section 5 is provided with a light-emitting part 501 for emitting laser light, irradiating lens unit 502, sheath flow cell 503 for irradiating by laser light, collective lens 504 disposed on a line extending in the direction of advancement of the light from the light-emitting part 50, pinhole 505 and PD (photodiode) 506 (a beam stopper which is not shown in the drawing is disposed between the sheath flow cell 503 and the collective lens 504), collective lens 507 which is disposed in a direction which intersects the direction of the light emitted from the light-emitting part 501, dichroic mirror 508, optical filter 509, pinhole 510 and APD (avalanche photodiode) 511, and PD (photodiode) 512 which is disposed on the dichroic mirror 508 side.

The light-emitting part 501 is provided to irradiate light on a sample flow which contains a measurement sample passing through the interior of the sheath flow cell 503. The irradiating lens unit 502 is provided to render the light emitted from the light-emitting part 501 into parallel rays. The PD 506 is provided to receive the forward scattered light emitted from the sheath flow cell 503 Note that information relating to the size of the particles (blood cells) in the measurement sample can be obtained from the forward scattered light emitted from the sheath flow cell 503.

The dichroic mirror 508 is provided to separate the side scattered light and the side fluorescent light emitted from the sheath flow cell 503. Specifically, the dichroic mirror 508 is provided to direct the side scattered light emitted from the sheath flow cell 503 to the PD 512, and to direct the side fluorescent light emitted from the sheath flow cell 503 to the APD 511. The PD 512 is also provided to receive the side scattered light. Internal information relating to the size and the like of the nucleus of the particles (blood cells) within the measurement sample can be obtained from the side scattered light emitted from the sheath flow cell 503.

The APD 511 is also provided to receive the side fluorescent light. When light irradiates a fluorescent substance such as a stained blood cell, light is emitted which has a longer wavelength that that of the irradiating light. The intensity of the fluorescence increases as the degree of staining increases. Therefore, characteristic information related to the degree of staining of the blood cell can be obtained by measuring the intensity of the side fluorescent light emitted from the sheath flow cell 503. It is therefore possible to perform other measurements in addition to classifying leukocytes by the difference in the side fluorescent light intensity. PD 506, PD 512, and APD 511 convert the optical signals of the respectively received light to electrical signals, and the converted electrical signals are then amplified by amplifiers 61, 62, and 63 and the amplified signals are transmitted to the control board 9.

In the first embodiment, the light-emitting part 501 emits light with an output of 3.4 mW during the leukocyte classification measurement (hereinafter referred to as "DIFF measurement"). The light-emitting part 501 also emits light with an output of 6 mW during the reticulocyte measurement (hereinafter referred to as "RET measurement"). The light-emitting part also emits light at an output of 10 mW during platelet measurement (hereinafter referred to as "PLT measurement").

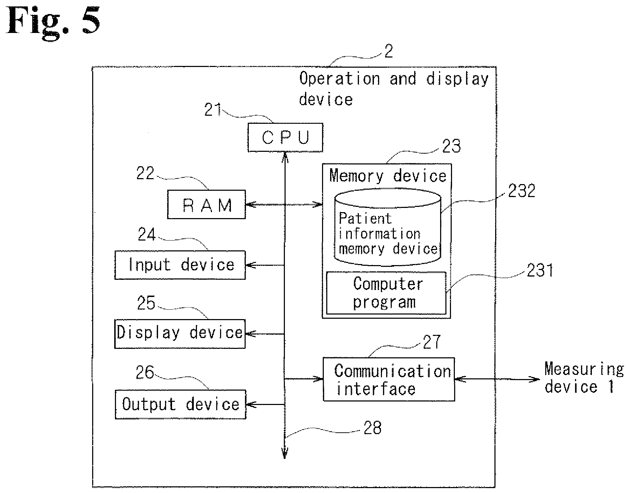

FIG. 5 is a block diagram showing the structure of the operation and display device 2 of the biological sample analyzer of the first embodiment of the present invention. As shown in FIG. 5, the operation and display device 2 is configured by a CPU (central processing unit) 21, RAM 22, memory device 23, input device 24, display device 25, output device 26, communication interface 27, and an internal bus 28 which is connected to the previously described hardware. The CPU 21 is connected to each piece of previously mentioned hardware of the operation and display device 2 through the internal bus 28, and controls the operation of the aforesaid hardware and executes various software functions according to a computer program 231 which is stored in the memory device 23. RAM 22 is configured of a volatile memory such as an SRAM, SDRAM or the like, and stores load modules during the execution of the computer program 231 as well as temporary data generated during the execution of the computer program 231.

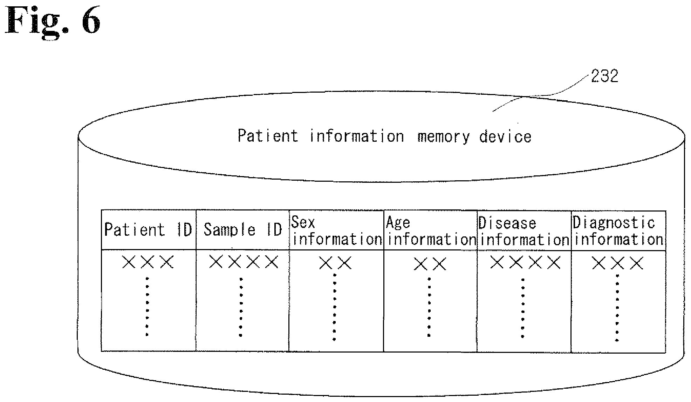

The memory device 23 is configured by an internal fixed type memory device (hard disk) or the like. The memory device 23 is also provided with a patient information memory device 232 which stores information relating to patients and including the age information of the patient (subject) associated with identification information which can be obtained by reading a barcode label. FIG. 6 shows an example of the data structure of the patient information memory device 232. As shown in FIG. 6, the patient information memory device 232 stores subject ID which is the identification information that identifies the subject, sex information of the subject, age information of the subject, disease information relating the content of the disease, and treatment information which identifies the treatment, and all of which is associated with a sample ID which is which is the identification information obtained by reading a barcode label. Note that the patient information memory device 232 is not limited to being provided in the memory device 23 insofar as the patient information may also be prestored on an external computer and obtained by querying the external computer through the communication interface 27.

The communication interface 27 is connected to the internal bus 28, and is capable of sending and receiving data when connected to the measuring device 1 through a communication line. That is, the communication interface 27 sends information instructing the start of a measurement and the like to the measuring device 1, and receives measurement data.

The input device 24 is a data input medium such as a keyboard and mouse or the like. The display device 25 is a display device such as a CRT monitor, LCD or the like, and graphically displays the analysis results. The output device 26 is a printing device such as a laser printer, inkjet printer or the like.

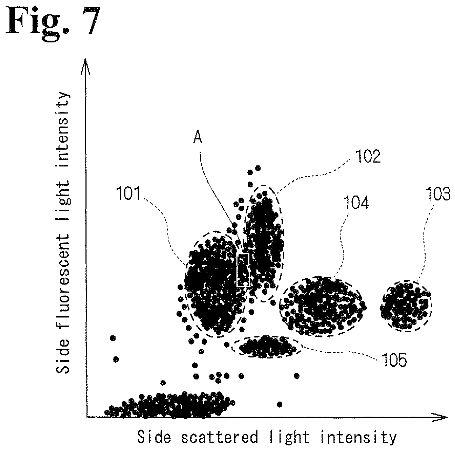

In the measuring device 1 and operation and display device 2 of the biological sample analyzer having the structure described above, a scattergram such as that shown in FIG. 7 is prepared and displayed on the display device 25 when adult blood is measured and the leukocytes contained in the blood have been classified as lymphocytes, monocytes, neutrophils, basophils, and eosinophils. FIG. 7 shows an example of a scattergram produced by the leukocyte classification measurement (DIFF measurement). In FIG. 7, the vertical axis represents the side fluorescent light intensity, and the horizontal axis represents the side scattered light intensity, respectively. The method of classifying leukocytes used by the biological sample analyzer of the first embodiment is described below.

In the biological sample analyzer of the first embodiment, a lymphocyte distribution region 101 in which lymphocytes are assumed to be distributed, a monocyte distribution region 102 in which monocytes are assumed to be distributed, an eosinphil distribution region 103 in which eosinophils are assumed to be distributed, a neutrophil distribution region 104 in which neutrophils are assumed to be distributed, and a basophil distribution region in which basophils are assumed to be distributed are predetermined based on previous statistical values of adult blood, as shown in FIG. 7. After integer sequence information has been sampled based on the measurement data, the degree of belonging of blood cells to each distribution region is then calculated for the lymphocyte distribution region 101, monocyte distribution region 102, eosinophil distribution region 103, neutrophil distribution region 104, and basophil distribution region 105, and each blood cell is classified into a specific type of blood cell according to the calculated degree of belonging. The numbers of lymphocytes, monocytes and the like can then be determined by counting the classified blood cells. This leukocyte classification method is described in detail in United States Patent No. 5,555,196. Note that the computer program for executing this leukocyte classification method, and the data used in the execution of this computer program are prestored in the memory device 23.

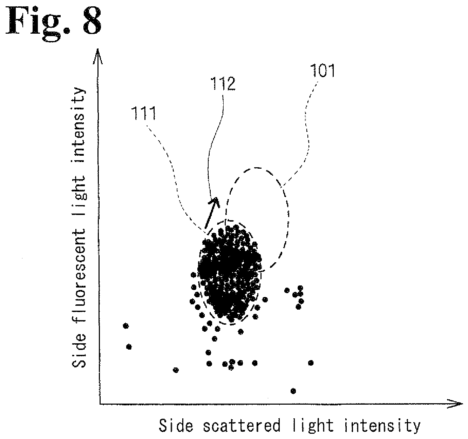

The present inventors acknowledge that the blood cells contained in child blood have lower stainability than blood cell contained in adult blood. It is therefore clear that the sampling values will be distributed somewhat lower in each region of the original distributions shown in FIG. 7 in measurement data obtained by measuring child blood. FIG. 8 shows an example of the relationship between sampling values and the lymphocyte distribution region 101 of a scattergram prepared for a DIFF measurement.

As shown in FIG. 8, the sampling values are clustered on the margin of the lymphocyte distribution region 101 in the case of measurement data of adult blood. However, when the measurement data are for a child blood rather than adult blood, both the fluorescent light intensity and the scattered light intensity are lower values when measured since the child blood has a lower stainability than does adult blood. The sampling values therefore cluster near the edge of the region 111 which is below the lymphocyte distribution region 101.

When the distribution trend from the scattergram is entirely shifted below the assumed region as described above, the measurement data can be determined to be data from child blood, and it can be understood that the region 111 in which the sampling values cluster must be shifted in the direction of the arrow 112 to improve the accuracy of the classification process. A means is disclosed below for shifting the measurement data of child blood in order to realize a classification process which has better accuracy using the same blood cell classification method as when classifying leukocytes based on adult blood, even when the measurement data are data from child blood.

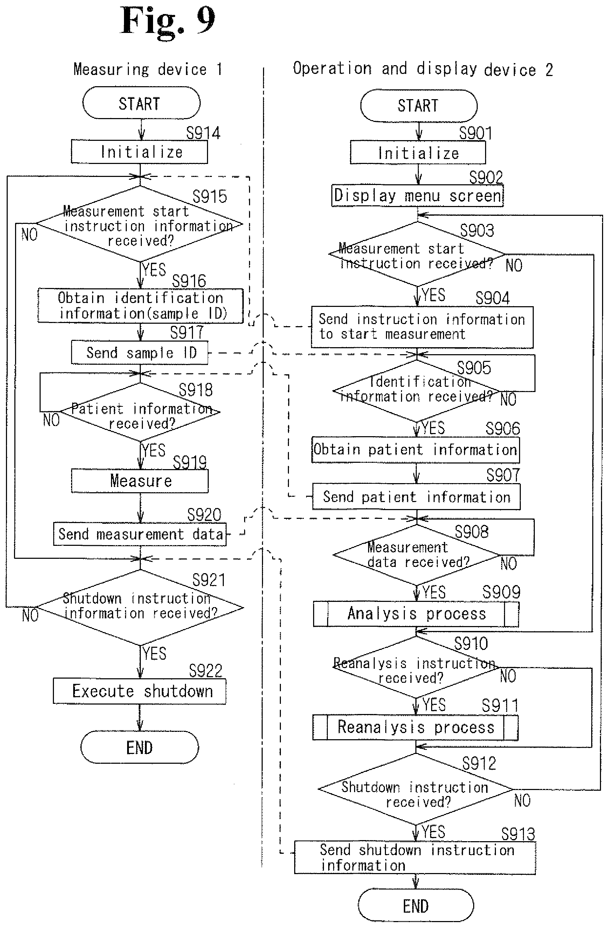

FIG. 9 is a flow chart showing the processing sequence of the CPU 21 of the operation and display device 2 and the controller 91 of the control board 9 of the measuring device 1 of the first embodiment of the present invention. The controller 91 of the measuring device 1 executes initialization (step S914) and an operations check of the each part of the measuring device 1 when the starting of the measuring device 1 is detected. The CPU 21 of the operation and display device 2 also executes initialization (program initialization) (step S901), and displays a menu screen on the display device 25 (step S902) when the starting of the operation and display device 2 is detected. The selection of the DIFF measurement, RET measurement, and CBC measurement (complete blood cell count measurement) can be input, and the measurement start instruction, and shutdown instruction and the like can be input from the menu screen. The case wherein the DIFF measurement has been selected on the menu screen in the first embodiment is described below.

The CPU 21 of the operation and display device 2 determines whether or not a measurement start instruction has been received (step S903); when the determination of the CPU 21 is that a measurement start instruction has not been received (step S903: NO), the CPU 21 skips the subsequent steps S904 through S909. When the CPU 21 has determined that a measurement start instruction has been received (step S903: YES), the CPU 21 transmits instruction information specifying to start a measurement to the measuring device 1 (step S904). The controller 91 of the measuring device 1 determines whether or not instruction information specifying to start a measurement has been received (step S915) ; when the controller 91 has determined that a instruction information specifying to start a measurement has been received (step S915: YES), the controller 91 has the barcode reader (not shown in the drawing) read the barcode label (not shown in the drawing) adhered to the container which contains the blood to obtain the blood identification information (sample ID) (step S916). When the controller 91 has determined that instruction information specifying to start a measurement has not been received (step S915: NO), the controller 91 skips steps 916 through S920.

The controller 91 transmits the obtained identification information (sample ID) to the operation and display device 2 (step S917), and the CPU 21 of the operation and display device 2 determines whether or not the identification information (sample ID) has been received (step S905). When the CPU 21 determines that the identification information (sample ID) has not been received (step S905: NO), the CPU 21 enters a reception standby state. When the CPU 21 determines that the identification information (sample ID) has been received (step S905: YES), the CPU 21 obtains the patient information by querying the patient information memory device 232 of the memory device 23 (step S906), and transmits the patient information to the measuring device 1 (step S907).

The controller 91 of the measuring device 1 then determines whether or not the patient information has been received (step S918) ; when the controller 91 determines that the patient information has not been received (step S918: NO), the controller 91 enters a reception standby state. When the controller determines that the patient information has been received (step S918: YES), the controller 91 controls the sample preparing section 41 so as to prepare a measurement sample, and thereafter starts the measurement of a measurement sample (step S919). Specifically, the DIFF measurement is executed, and the electrical signals corresponding to the intensity of the received side scattered light and side fluorescent light are transmitted to the control board 9 via the detecting section 5 and the analog processing section 6. The A/D converter 92 of the control board 9 converts the obtained analog signals to 12-bit digital signals, and the operation section 93 subjects the digital signals output from the A/D converter 92 to predetermined processing, and transmits the signals to the controller 91. The controller 91 transmits the received 12-bit integer sequence information as measurement data to the operation and display device 2 (step S920).

The CPU 21 of the operation and display device 2 determines whether or not the measurement data have been received (step S908) ; when the CPU 21 determines that the measurement data have been received (step S908: YES), the CPU 21 executes an analysis process based on the received measurement data (step S909) . When the CPU 21 determines that the measurement data have not been received (step S908: NO), the CPU 21 enters a reception standby state.

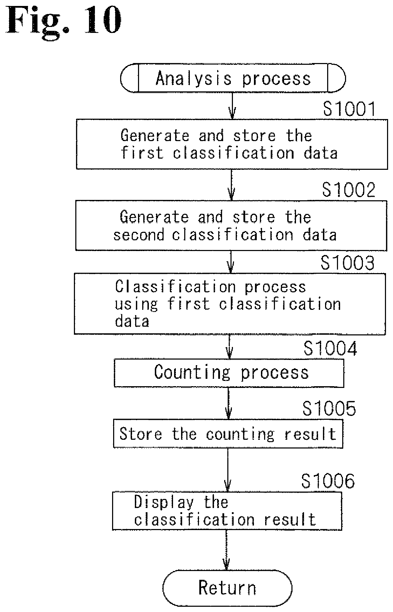

FIG. 10 is a flow chart showing the sequence of the analysis process executed in step S909 of FIG. 9 by the CPU 21 of the operation and display device 2 of the first embodiment of the present invention. In FIG. 10, the CPU 21 of the operation and display device 2 generates a first classification data by compressing the measurement data (12-bit integer sequence information) obtained from the measuring device 1 to 8-bit integer sequence information and stores the first classification data in the memory device 23 (step S1001), and generates a second classification data which is 8-bit integer sequence information with data values that are larger than the data values of the first classification data generated in step S1001 and stores the second classification data in the memory device 23 (step S1002) . The first classification data are data which are used when analysis is based on adult blood, and the second classification data are data which are used when analysis is performed based on child blood. That is, the obtained integer sequence information of the child blood must be slightly elevated in order to classify the blood cells within the blood using the same blood cell classification method as adult blood because child blood cells have a lower stainability than does adult blood.

Specifically, the CPU 21 compresses the 12-bit integer sequence information obtained from the measuring device 1 directly to 8-bit integer sequence data when generating the first classification data, and after multiplying the 12-bit integer sequence information 1.2 times, then compresses the integer part to 8-bit integer sequence data when generating the second classification data. By multiplying the 12-bit integer sequence information 1.2 times and thereafter compressing the 8-bit data to generate the second classification data for child blood in this way, a proportion which maintains the continuity of the integer sequence values can be increased compared to when the first classification data of adult blood is simply multiplied 1.2 times to generate the second classification data.

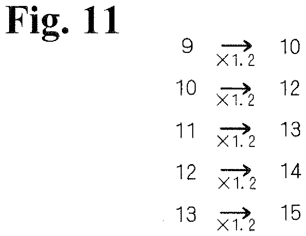

FIG. 11 shows an example of a measurement data operation processing result. That is, when the measurement data are integer values which are consecutively 9 through 13, "11" is deleted when these integer values are simply multiplied 1.2 times, so that the values are no longer consecutive integer values, as shown in FIG. 11. Thus, there is concern that an accurate count result cannot be obtained when classifying a plurality of types of particles.

In the first embodiment, the measurement data is obtained as integer sequence information which has a larger number of bits (12-bits) than the number of bits (8-bits) used in the classification process, and the measurement data are multiplied 1.2 times to generate a second classification data of child blood by compressing the integer part of the multiplied data to 8-bit integer sequence information. The classification process is then executed on the generated second classification data. A proportion which maintains the continuity of the integer values can be increased thereby. That is, since the 12-bit integer sequence information is multiplied 1.2/16 times when generating the second classification data for child blood compared to multiplying the 12-bit integer sequence information 1/16 times when generating the first classification data for adult blood, the range of the measurement data which are the same integer values when multiplied 1.2/16 times is broadened, thus making errors difficult to occur.

For example, consider the case when the number of each element (X1, X2) (where X1, X2=0, 1, 2...) is designated F in two-dimensional distribution data DN which has N×N (N being a natural number) individual elements, and the two-dimensional distribution data Dn are compressed to two-dimensional distribution data Dm which has M×M (M being a natural number) individual elements. Furthermore, M<N obtains.

Each element (X1, X2) in the two-dimensional distribution data which has N×N individual elements corresponds to the elements (U1, U2) (where U1, U2=0, 1, 2,...) shown in equation (1) in the distribution data Dm. In equation (1), Int(x) is a function which represents the integer part of the argument x. This is equivalent, for example, to the process of compressing 12-bit measurement data to 8-bits.

$$(U1, U2) = (Int(X1(M/N), Int(X2(M/N) \quad ...(1)$$

Next, when the two-dimensional distribution data DL which has L(L individual elements in a partial region within the two-dimensional distribution data Dm are converted to two-dimensional distribution data which has M(M individual elements (L<M<N), the elements (X1, X2) (where X1, X2=0, 1, 2,..., N(L/M) in the distribution data Dn corresponds to the elements (VI, V2) (where V1, V2=0, 1, 2,..., M) in the distribution data Dml, as shown in equation (2). This is equivalent to a process which shifts up the 8-bit data.

$$(V1, V2) = (Int(X1(M2/(N(L), Int(X2(M2/(N(L) \quad ...(2)$$

That is, the number of elements of the distribution data Dml can be calculated and converted to smooth distribution data by initially converting (expanding) the two-dimensional distribution data DL which have an L(L element partial region to two-dimensional distribution data which have N(N elements, and then converting to two-dimensional distribution data which have M(M elements.

Returning to FIG. 10, the CPU 21 of the operation and display device 2 executes the leukocyte classification process based on the generated first classification data (step S1003), counts the number of classified lymphocytes, monocytes, eosinophils, neutrophils, and basophils (step S1004), and stores the count results in the memory device 23 (step S1005) . The CPU 21 also generates a scattergram such as that shown in FIG. 7, displays the count results and the scattergram on the display device 25 as leukocyte classification results (step S1006), and the process returns to step S910of FIG. 9. The user can visually confirm the scattergram displayed on the display device 25, for example by confirming whether or not the sampling values are distributed below the pre-assumed distribution region. When the sampling values are distributed below the pre-assumed distribution region, the user then determines that an analysis failure has occurred because the analyzed blood is child blood, and inputs an execution instruction to execute a reanalysis process based on child blood.

Returning to FIG. 9, the CPU 21 of the operation and display device 2 determines whether or not a reanalysis execution instruction has been received from the user (step S910); when a reanalysis execution instruction has been received (step S910: YES), the CPU 21 executes the reanalysis process (step S911). Specifically, a "reanalysis" button is provided on the toolbar of the screen which displays the classification results on the display device 25, and the CPU 21 receives the reanalysis instruction when the "reanalysis" button is selected by the user.

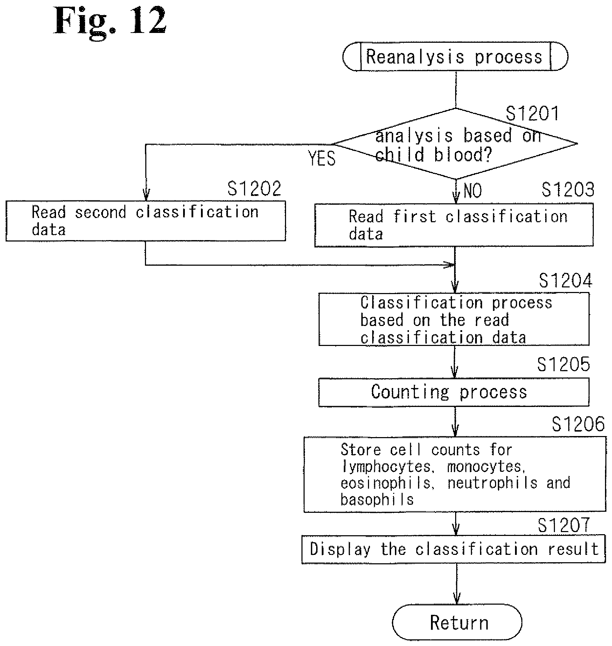

FIG. 12 is a flow chart showing the sequence of the reanalysis process executed in step S911 of FIG. 9 by the CPU 21 of the operation and display device 2 of the first embodiment of the present invention. In FIG. 12, the CPU 21 of the operation and display device 2 determines whether or not to execute the reanalysis based on child blood (step S1201). In the operation and display device 2, not only can a reanalysis instruction be issued to reanalyze classification results obtained based on adult blood to obtain classification results based on child blood, a reanalysis instruction can also be issued to reanalyze classification results obtained based on child blood to obtain classification results base don adult blood. Thus, the CPU 21 reads the second classification data from the memory device 23 (step S1202) when the CPU 21 determines whether or not to execute reanalysis based on child blood in step S1201, that is, determines whether or not a reanalysis instruction specifying reanalysis of classification results obtained based on adult blood so as to obtain classification results based on child blood has been received from the user and the CPU 21 has determined to execute reanalysis based on child blood (step S1201: YES).

When the CPU 21 has determined to not execute reanalysis based on child blood (step S1201: NO), the CPU 21 reads the first classification data from the memory device 23 (step S1203) . The CPU 21 executes the classification process based on the read first classification data or second classification data (step S1204), and counts the numbers of classified lymphocytes, monocytes, eosinophils, neutrophils, and basophils. The CPU 21 stores the count results in the memory device 23 (step S1206), displays the classification results on the display device 25 (step S1207), and the process returns to step S912.

Note that "Child" in this case may mean a newborn, infant, or toddler. The user of the biological sample analyzer of this embodiment may optionally set the sample analyzer, for example, so that a patient admitted to a pediatric department or obstetrics and gynecology department is designated as a "child," or a child who is a preschooler may be designated as a "child, " rather than a patient less than a predetermined age. The manufacturer who fabricates the biological sample analyzer may also set the range of the "child."

Returning to FIG. 9, the CPU 21 of the operation and display device 2 determines whether or not a shutdown instruction has been received (step S912) ; when the CPU 21 has determined that a shutdown instruction has not been received (step S912: NO), the CPU 21 returns the process to step S903, and the previously described process is repeated. When the CPU 21 has determined that a shutdown instruction has been received (step S912: YES), the CPU 21 transmits shutdown instruction information to the measuring device 1 (step S913).

The controller 91 of the measuring device 1 determines whether or not shutdown instruction information has been received (step S921); when the controller 91 has determined that shutdown instruction information has not been received (step S921: NO), the controller 91 returns the process to step S915 and the previously described process is repeated. When the controller 91 has determined that shutdown instruction information has been received (step S921: YES), the controller 91 executes shutdown (step S922) and the process ends.

According to the first embodiment described above, high precision analysis results can be obtained by changing the classification data of "child blood" and "adult blood" .

According to the first embodiment, it is possible to save time and a great deal of the expense required to develop various analysis programs because analysis processing can be executed using a shared common analysis program even when the ages of the patients differ.

Note that although a first classification data for adult blood and a second classification data for child blood are generated and stored in a memory device 23 before a user specifies re-analysis in the embodiment described above, the second classification data for child blood need not be generated until the user specifies re-analysis on the basis of child blood and then generating the second classification data at the time such specification has been made. In this case, the operation processing load on the device can be reduced since the second classification data are only generated when specified.

Although the classification process is executed for child blood when an instruction specifying the execution of a reclassification process for child blood has been issued by the user after the classification process for adult blood has been executed in the above embodiment, the present invention is not limited to this sequence. For example, the classification process for child blood may also be executed when it has been determined that the blood is child blood based on the age information stored in the patient information memory part 232.

Although the analysis process for adult blood and the analysis process for child blood are executed by respectively generating a first classification data for adult blood and second classification data for child blood then performing a classification process based on the first classification data and performing a classification process based on the second classification data, the present invention is not limited to this sequence. The first classification data for adult blood and the second classification data for child blood may also be identical, then the first classification data may be processed using an adult blood cell classification method in the case of adult blood, and the second classification data may be processed using a child blood classification method in the case of child blood. For example, when classifying white blood cells, the previously mentioned lymphocyte distribution region, the monocyte distribution region and the like (refer to FIG. 7) may be set to different regions when performing the analysis process for child blood and when performing the analysis process for adult blood.

Although white blood cells are analyzed using the second classification data for child blood when a re-analysis instruction is issued from the user and the classification results are subsequently displayed in the first embodiment, the present invention is not limited to this arrangement. A classification process based on the first classification data for adult blood and a classification process based on the second classification data for child blood may both be executed before a re-analysis instruction is issued by the user. Furthermore, the classification results based on adult blood and the classification results based on child blood may be prestored in the memory device so that the classification results based on child blood can be displayed when an instruction to display the classification results based on child blood has been issued by the user.

[Second Embodiment]

The biological sample analyzer of a second embodiment of the present invention is described in detail below based on the drawings. Structures of the biological sample analyzer of the second embodiment of the present invention which are identical to the first embodiment are designated by like reference numbers and detailed description thereof is omitted. The second embodiment differs from the first embodiment in that the patient age information is obtained before starting the blood sample measurements, and whether or not the measurement sample is adult blood or child blood is determined based on the age information and thereafter the measurement data are obtained in accordance with the corresponding measurement condition.

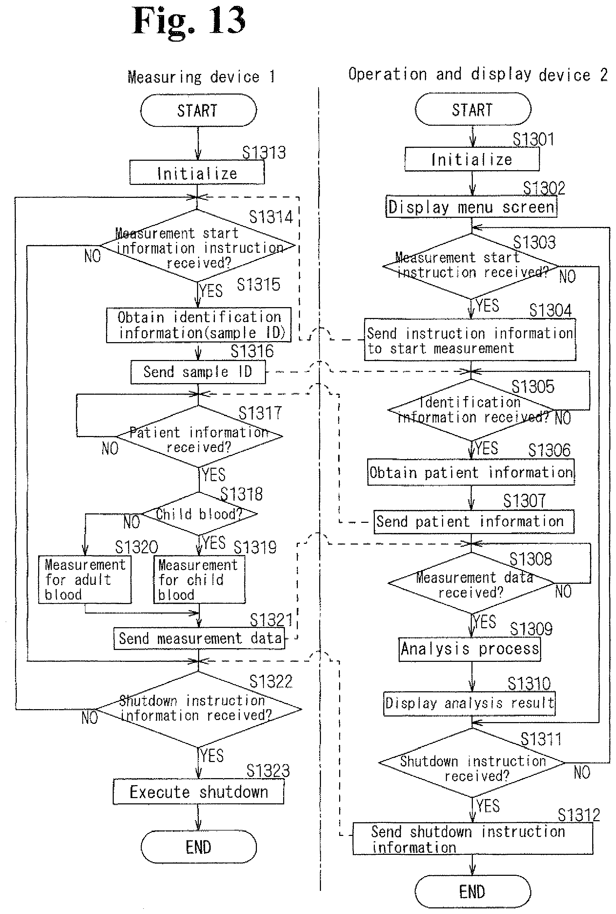

FIG. 13 is a flow chart showing the processing sequence of the CPU 21 of the operation display device 2 and the controller 91 of the control board 9 of the measuring device 1 of the second embodiment of the present invention. The controller 91 of the measuring device 1 executes initialization (step S1313) and an operations check of the each part of the measuring device 1 when the starting of the measuring device 1 is detected. The CPU 21 of the operation display device 2 also executes initialization (program initialization) (step S1301), and displays a menu screen on the display device (step S1302) when the starting of the operation display device 2 is detected. The selection of the DIFF measurement, RET measurement, and CBC measurement can be input, and the measurement start instruction, and shutdown instruction and the like can be input from the menu screen. The case wherein the DIFF measurement has been selected on the menu screen in the second embodiment is described below.

The CPU 21 of the operation display device 2 determines whether or not a measurement start instruction has been received (step S1303) ; when the determination of the CPU 21 is that a measurement start instruction has not been received (step S1303: NO), the CPU 21 skips the subsequent steps S1304 through S1310. When the CPU 21 has determined that a measurement start instruction has been received (step S1303: YES), the CPU 21 transmits instruction information specifying to start a measurement to the measuring device 1 (step S1304) . The controller 91 of the measuring device 1 determines whether or not instruction information specifying to start a measurement has been received (step S1314); when the controller 91 has determined that instruction information specifying to start a measurement has been received (step S1314: YES), the controller 91 has the barcode reader (not shown in the drawing) read the barcode label (not shown in the drawing) adhered to the container which contains the blood to obtain the blood identification information (sample ID) (step S1315). When the controller 91 has determined that instruction information specifying to start a measurement has not been received (step S1314:NO), the controller 91 skips steps S1315 through S1321.

The controller 91 transmits the obtained identification information (sample ID) to the operation display device 2 (step S1316), and the CPU 21 of the operation display device 2 determines whether or not the identification information (sample ID) has been received (step S1305). When the CPU 21 determines that the identification information (sample ID) has not been received (step S1305: NO), the CPU 21 enters a reception standby state. When the CPU 21 determines that the identification information (sample ID) has been received (step S1305: YES), the CPU 21 obtains the patient information which includes the patient age information by querying the patient information memory section 232 of the memory device 23 (step S1306) .

The CPU 21 transmits the obtained patient information to the measuring device 1 (step S1307), and the controller 91 of the measuring device 1 determines whether or not the patient information has been received (step S1317). When the controller 91 determines that the patient information has not been received (step S1317: NO), the controller 91 enters the reception standby state. When the controller 91 determines that the patient information has been received (step S1317: YES), the controller 91 then determines whether or not the measurement object blood is child blood based on the received patient information (step S1318). Specifically, the measurement object blood is determined to be child blood if the patient age is a predetermined age, for example, an age of less than 1 year.

When the controller 91 determines that the measurement object blood is child blood (step S1318: YES), the controller 91 starts the measurement of the blood using the measurement condition for child blood (step S1319). Specifically, when performing the measurement for child blood, the controller 91 controls the sample preparing section 41 so as to prepare a measurement sample, and thereafter sets the operating voltage of the PD 512 and APD 511 of the detecting section 5 to 290 V, and detects the side scattered light and side fluorescent light from the blood cells in the measurement sample. Specifically, the electrical signals corresponding to the intensity of the received side scattered light and side fluorescent light are transmitted to the control board 9 via the detecting section 5 and the analog processing section 6. The A/D converter 92 of the control board 9 converts the obtained analog signals to 12-bit digital signals, and the operation section 93 performs predetermined processing to the digital signals output from the A/D converter 92, and transmits the signals to the controller 91.

On the other hand, when the controller 91 determines that the measurement object blood is not child blood (step S1318: NO), the controller 91 starts the measurement of the blood using the measurement condition for adult blood (step S1320). Specifically, the controller 91 controls the sample preparing section 41 so as to prepare a measurement sample, and thereafter sets the operating voltage of the PD 512 and APD 511 of the detecting section 5 to 280 V, and detects the side scattered light and side fluorescent light from the blood cells in the measurement sample. The subsequent measurement sequence is identical to that for child blood and is therefore not described in detail. Thus, the operating voltage is set at 290 V for the PD 512 and APD 511 of the detecting section 5 when measuring child blood compared to setting the operating voltage at 280 V for the PD 512 and APD 511 of the detecting section 5 when measuring adult blood, so that the same fluorescent intensity can be obtained when measuring child blood which contains blood cells which are difficult to stain as when measuring adult blood. Analysis results can therefore be obtained with excellent precision by the analysis process which is described below, even without performing the child blood analysis process.

Note that the amount of the staining solution used when preparing the measurement sample may be changed depending on whether adult blood measurement is performed or child blood measurement is performed. For example, 25 μl if staining solution may be used to prepare child blood measurement samples, whereas 20 μl of staining solution may be used to prepare adult blood measurement samples . Thus, fluorescent light of the same intensity as adult blood can be obtained from the blood cells contained in child blood.

When preparing a child blood measurement sample, the amount of hemolytic agent added to the blood may also be greater than when preparing an adult blood measurement sample And the hemolysis time may be increased to facilitate adequate hemolysis and staining of the blood cells contained in child blood by the staining solution. The staining time may also be increased to adequately stain the blood cells in child blood.

The illumination intensity of the light from the light source 501 may also be higher when measuring child blood than when measuring adult blood, and the electric signals subjected to photoelectric conversion by the PD 51 and APD 511 may be amplified by an increased amplification factor in the amplifiers 62 and 63.

The controller 91 transmits the received 12-bit integer sequence information as measurement data to the operation display device 2 (step S1321). The CPU 21 of the operation display device 2 determines whether or not measurement data have been received (step S1308); when the CPU 21 determines that measurement data have not been received (step S1308: NO), the CPU 21 enters the reception standby state. When the CPU 21 determines that the measurement data have been received (step S1308: YES), the CPU 21 executes the analysis process on the received measurement data (step S1309), and displays the analysis results on the display device 25 (step S1310).

The CPU 21 determines whether or not a shutdown instruction has been received (step S1311); when the CPU 21 determines that a shutdown instruction has not been received (step S1311: NO), the CPU 21 returns the process to step S1303 and the process described above is repeated. When the CPU 21 has determined that a shutdown instruction has been received (step S1311: YES), the CPU 21 transmits shutdown instruction information to the measuring device 1 (step S1312) .

The controller 91 of the measuring device 1 determines whether or not shutdown instruction information has been received (step S1322); when the controller 91 has determined that shutdown instruction information has not been received (step S1322: NO), the controller 91 returns the process to step S1314 and the previously described process is repeated. When the controller 91 has determined that shutdown instruction information has been received (step S1322: YES), the controller 91 executes shutdown (step S1323) and the process ends.

Note that although the controller 91 of the measuring device 1 determines whether or not a sample is child blood based on the patient information received from the operation display device 2 in the second embodiment, the CPU 21 of the operation display device 2 may also determine whether or not a sample is child blood based on the patient information stored in the patient information memory part 232 and may transmit the determination result to the measuring device 1.

Whether or not a sample is child blood is not limited to being determined based on the age information stored in the patient information memory part 232 of the operation display device 2, inasmuch as the determination may also be made by a comprehensive determination which includes other information. Furthermore, a configuration may pre-provide a memory part for storing the age information in the measuring device 1, and the patient age information of a patient can be input by a user and stored in the memory part in the display and operation unit 7 so that the determination can be made based on the age information stored in the memory part.

A screen for setting a child blood mode which performs measurements of measurement object blood under condition used for child blood, or an adult blood mode which performs measurements under condition used for adult blood, may be displayed on the display device 25 of the operation display device 2 or on the display and operation section 7 of the measuring device 1, so that the measurement of the blood is performed in a user-set mode.

According to the second embodiment described above, characteristic information of blood cells in blood can be respectively obtained under measurement condition suited for adults when a patient is an adult and under measurement condition suited for children when the patient is a child by changing the measurement condition of the sample blood based on whether the patient is adult or child. Therefore, influences caused by differences in the degree of staining of the blood cells can be suppressed, and high precision analysis results can be obtained.

Note that although a blood analyzer which analyzes blood cells contained in blood which is used as a sample is described by way of example in the above first and second embodiments, the present invention is not limited to these examples inasmuch as the same effect may be expected when the present invention is applied to a biological sample analyzer which analyzes samples which contain biological particles such as cells in urine. Although the analysis results are displayed by the display device 25 of the operation display device 2 in the first and second embodiments described above, the present invention is not specifically limited to this example inasmuch as the results may also be displayed on a display device of another computer connected to a network.

Although the patient age information is associated with a sample ID in the patient information memory part 232 in the first and second embodiment described above, the present invention is not limited to this arrangement inasmuch as, for example, information which indicates a patient is newborn, infant, toddler or the like may also be prestored in the patient information memory section 232.

Although the first classification data and second classification data are generated by obtaining 12-bit integer sequence information as measurement data from the measuring device 1 and compressing the 12-bit integer sequence information to 8-bit integer sequence information in the first and second embodiments described above, the present invention is not limited to this configuration. For example, 16-bit integer sequence information may also be obtained from the measuring device 1 and used to generate 10-bit classification data. Moreover, the measurement data and classification data need not necessarily be integer sequence information.

In the first and second embodiments described above, the 12-bit integer sequence information obtained from the measuring device 1 is directly compressed to 8-bit integer sequence information when generating the first classification data for adult blood, and the 12-bit integer sequence information is multiplied by 1.2 and thereafter the integer sequence information is compressed to 8-bit integer sequence information when generating the second classification data for child blood; however, the present invention is not limited to this configuration. The 8-bit integer sequence information may be obtained as measurement data from the measuring device 1 and the 8-bit integer sequence information obtained from the measuring device 1 may be directly used when performing the classification process for blood cells in adult blood, and the 8-bit integer sequence information obtained from the measuring device 1 may be multiplied by 1.2 to obtain integer sequence information to be used when performing the classification process for blood cells in child blood.

In the embodiments described above, the conditions of the analysis process and the measurement process are determined based on whether a patient is adult or child; however, the present invention is not limited to this configuration. The conditions of the analysis process and the measurement process may also be determined based on whether a patient has a predetermined attribute. For example, the determination may be made based on whether a patient has a predetermined disease, or may be made based on whether a patient has been administered a predetermined medication. Such attribute information is desirably associated with the sample ID and prestored in the patient information memory part 232.

## Claims

1. A biological sample analyzer, comprising:

   a characteristic information obtainer for obtaining fluorescent light intensity as characteristic information representing a degree of staining of a blood cell contained in a biological sample of a patient;
   a processor; and
   a memory storing software instructions adapted to enable the processor to perform operations comprising:

   (a) analyzing the characteristic information without shifting the characteristic information for analyzing a biological sample of a patient who does not have a predetermined attribution; and (b)analyzing the characteristic information with shifting the characteristic information for analyzing a biological sample of a patient who has the predetermined attribution;

   wherein a patient who has the predetermined attribution is a child, and a patient who does not have the predetermined attribution is an adult.

2. The biological sample analyzer of claim 1,
   wherein the operation (a) comprises operations comprising:

   (c) generating, based on the first condition, first classification data for classifying components in the biological sample from the characteristic information obtained by the characteristics information obtainer; and
   (d) classifying the components in the biological sample into a plurality of components based on a predetermined classification condition and the first classification data;

   and wherein the operation (b) comprises operations comprising:

   (e) generating, based on the second condition, second classification data for classifying the components in the biological sample from the characteristic information obtained by the characteristics information obtainer; and
   (f) classifying the components in the biological sample into a plurality of components based on the predetermined classification condition and the second classification data.

3. The biological sample analyzer of claim 1 or 2, wherein the operation (a) comprises operations comprising:

(g) generating classification data for classifying components in the biological sample from the characteristic information obtained by the characteristic information obtainer; and
(h) classifying the components in the biological sample into a plurality of kinds of components based on the classification data and the first condition;

and wherein the operation (b) comprises operations comprising:

(i) generating the classification data; and
(j) classifying the components in the biological sample into a plurality of kinds of components based on the classification data and the second condition.

4. The biological sample analyzer of any one of claims 1 to 3,
wherein the software instruction is adapted to enable the processor to perform an operation of

(k) determining whether the patient has the predetermined attribution or not;

and wherein the software instruction is adapted to enable the processor to perform the operation (a) when it is determined that the patient does not have the predetermined attribution in the operation (k), and is adapted to enable the processor to perform the operation (b) when it is determined that the patient has the predetermined attribution in the operation (k).

5. The biological sample analyzer of claim 4, further comprising
an identification information obtainer for obtaining identification information for identifying the biological sample wherein
the memory is configured to store attribute information representing attribution of the patient with the identification information;
the software instruction is adapted to enable the processor to perform the operation (k), based on the identification information obtained by the identification information obtainer and the attribute information stored in the memory.

6. The biological sample analyzer of any one of claims 1 to 5,
wherein the software instruction is adapted to enable the processor to perform an operation of

(1) receiving instruction information representing instruction to analyze the characteristic information based on the second condition corresponding to the predetermined attribute;

and wherein the software instruction is adapted to enable the processor to perform the operation (b) when the instruction information has been received in the operation (l).

7. A biological sample analyzer according to claim 1 comprising
a processing section for executing an operation to analyze the characteristic information obtained by the characteristic information obtainer.

8. The biological sample analyzer of claim 7, further comprising:

an identification information obtainer for obtaining identification information for identifying the biological sample;
an attribute information memory for storing attribute information representing attribution of the patient with the identification information; and
determining means for determining whether the patient has the predetermined attribution or not, based on the identification information obtained by the identification information obtainer and the attribute information stored in the attribute information memory;

wherein the characteristic information obtainer obtains the characteristic information based on the first obtaining condition when the determining means has determined that the patient does not have the predetermined attribute, and obtains the characteristic information based on the second obtaining condition when the determining means has determined that the patient has the predetermined attribute.

9. The biological sample analyzer of claim 7 or 8, further comprising
instruction information receiving means for receiving instruction information representing instruction to obtain the characteristic information based on the second obtaining condition,
wherein the characteristic information obtainer obtains the characteristic information based on the second obtaining condition when the instruction information receiving means has received the instruction information.

10. The biological sample analyzer of any one of claims 1 to 9, wherein
a patient who has the predetermined attribution is a child, and a patient who does not have the predetermined attribution is an adult.

11. The biological sample analyzer of claim 10, wherein the characteristic information obtainer comprises:

a sample preparing section for preparing a measurement sample from the biological sample and a staining solution;
a fluorescent light detecting section for irradiating the measurement sample with light and detecting fluorescent light emitted from the measurement sample; and
a detection controller for controlling the detecting section so as to detect the fluorescent light at a detection sensitivity suited for an biological sample of an adult when the patient is an adult, and detect the fluorescent light at a detection sensitivity suited for an biological sample of a child when the patient is a child.

12. The biological sample analyzer of claim 10, wherein the characteristic information obtainer comprises:

a sample preparing section for preparing a measurement sample from the biological sample and a staining solution;
a fluorescent light detecting section for irradiating the measurement sample with light and detecting fluorescent light emitted from the measurement sample; and
a sample preparation controller for controlling the sample preparing section so as to prepare a measurement sample with the staining solution in an amount suited for an biological sample of an adult when the patient is an adult, and prepare a measurement sample with the staining solution in an amount suited for the biological sample of a child when the patient is a child.

13. The biological sample analyzer of any one of claims 1 to 12, wherein
the characteristic information obtainer obtains the characteristic information of leukocytes in the biological sample.

14. The biological sample analyzer of any one of claims 1 to 13, further comprising
a display part,
wherein the processing section is configured to perform operations comprising:

(m) generating distribution diagram data for showing a distribution diagram representing state of distribution of components in the biological sample based on the characteristic information obtained by the characteristic information obtainer; and
(n) controlling the display part so as to display the distribution diagram.

15. A computer program product for enabling a computer to control a biological sample analyzer, comprising:

a computer readable medium, and
software instructions, on the computer readable medium, for enabling the computer to perform predetermined operations comprising:

(a) controlling the biological sample analyzer so as to obtain fluorescent light intensity as characteristic information representing a degree of staining of a blood cell contained in a biological sample of a patient;
(b) analyzing the characteristic information without shifting the characteristic information for analyzing a biological sample of a patient who does not have a predetermined attribution; and (c)analyzing the characteristic information with shifting the characteristic information for analyzing a biological sample of a patient who has the predetermined attribution;

wherein a patient who has the predetermined attribution is a child, and a patient who does not have the predetermined attribution is an adult.

**Patentansprüche**

1. Analysegerät für biologische Proben, umfassend:

   einen Erhalter von charakteristischer Information zum Erhalten einer Intensität von fluoreszierendem Licht als charakteristische Information, die einen Grad der Färbung einer in einer biologischen Probe eines Patienten enthaltenen Blutzelle darstellt;
   einen Prozessor; und
   einen Speicher zum Speichern von Software-Anweisungen, der angepasst ist, um den Prozessor in die Lage zu versetzen, Vorgänge durchzuführen, die umfassen:

   a) Analysieren der charakteristischen Information ohne Verschieben der charakteristischen Information zum Analysieren einer biologischen Probe eines Patienten, der keine vorbestimmte Zuordnung aufweist; und
   b) Analysieren der charakteristischen Information mit Verschieben der charakteristischen Information zum Analysieren einer biologischen Probe eines Patienten, der eine vorbestimmte Zuordnung aufweist;

   wobei ein Patient, der die vorbestimmte Zuordnung aufweist, ein Kind ist, und ein Patient, der die vorbestimmte Zuordnung nicht aufweist, ein Erwachsener ist.

2. Analysegerät für biologische Proben nach Anspruch 1,
   wobei der Vorgang a) Vorgänge umfasst, die umfassen:

   c) Erzeugen, basierend auf der ersten Bedingung, erster Klassifizierungsdaten zum Klassifizieren von Komponenten in der biologischen Probe aus der charakteristischen Information, die von dem Erhalter von charakteristischer Information erhalten wurde; und
   d) Klassifizieren der Komponenten in der biologischen Probe in eine Vielzahl von Komponenten basierend auf einer vorbestimmten Klassifizierungsbedingung und den ersten Klassifizierungsdaten;

   und wobei der Vorgang b) Vorgänge umfasst, die umfassen:

   e) Erzeugen, basierend auf der zweiten Bedingung, zweiter Klassifizierungsdaten zum Klassifizieren von Komponenten in der biologischen Probe aus der charakteristischen Information, die von dem Erhalter von charakteristischer Information erhalten wurde; und
   f) Klassifizieren der Komponenten in der biologischen Probe in eine Vielzahl von Komponenten basierend auf der vorbestimmten Klassifizierungsbedingung und den zweiten Klassifizierungsdaten.

3. Analysegerät für biologische Proben nach Anspruch 1 oder 2,
   wobei der Vorgang a) Vorgänge umfasst, die umfassen:

   g) Erzeugen von Klassifizierungsdaten zum Klassifizieren von Komponenten in der biologischen Probe aus der charakteristischen Information, die von dem Erhalter von charakteristischer Information erhalten wurde; und
   h) Klassifizieren der Komponenten in der biologischen Probe in eine Vielzahl von Arten von Komponenten basierend auf den Klassifizierungsdaten und der ersten Bedingung;

   und wobei der Vorgang b) Vorgänge umfasst, die umfassen:

   i) Erzeugen der Klassifizierungsdaten; und
   j) Klassifizieren der Komponenten in der biologischen Probe in eine Vielzahl von Arten von Komponenten basierend auf den Klassifizierungsdaten und der zweiten Bedingung.

4. Analysegerät für biologische Proben nach einem der Ansprüche 1 bis 3,
   wobei die Software-Anweisung angepasst ist, um den Prozessor in die Lage zu versetzen, einen Vorgang durchzuführen des

   k) Bestimmens, ob der Patient die vorbestimmte Zuordnung aufweist oder nicht;

   und wobei die Software-Anweisung angepasst ist, um den Prozessor in die Lage zu versetzen, den Vorgang a) durchzuführen, wenn bestimmt wird, dass der Patient die vorbestimmte Zuordnung im Vorgang k) nicht aufweist, und angepasst ist, um den Prozessor in die Lage zu versetzen, den Vorgang b) durchzuführen, wenn bestimmt wird, dass der Patient die vorbestimmte Zuordnung im Vorgang k) aufweist.

5.  Analysegerät für biologische Proben nach Anspruch 4, weiter umfassend
    einen Erhalter von Identifizierungsinformation zum Erhalten von Identifizierungsinformation zum Identifizieren der biologischen Probe,
    wobei
    der Speicher konfiguriert ist, um eine Zuordnungsinformation, die eine Zuordnung des Patienten zu der Identifizierungsinformation darstellt, zu speichern;
    die Software-Anweisung angepasst ist, um den Prozessor in die Lage zu versetzen, den Vorgang k) basierend auf der Identifizierungsinformation, die vom Erhalter von Identifizierungsinformation erhalten wurde, und der im Speicher gespeicherten Zuordnungsinformation durchzuführen.

6.  Analysegerät für biologische Proben nach einem der Ansprüche 1 bis 5,
    wobei die Software-Anweisung angepasst ist, um den Prozessor in die Lage zu versetzen, einen Vorgang durchzuführen des

    l) Empfangens einer Anweisungsinformation, die eine Anweisung zum Analysieren der charakteristischen Information basierend auf der zweiten Bedingung entsprechend der vorbestimmten Zuordnung darstellt;

    und wobei die Software-Anweisung angepasst ist, um den Prozessor in die Lage zu versetzen, den Vorgang b) durchzuführen, wenn die Anweisungsinformation im Vorgang l) empfangen worden ist.

7.  Analysegerät für biologische Proben nach Anspruch 1, umfassend
    einen Verarbeitungsabschnitt zum Ausführen eines Vorgangs zum Analysieren der charakteristischen Information, die von dem Erhalter von charakteristischer Information erhalten wurde.

8.  Analysegerät für biologische Proben nach Anspruch 7, weiter umfassend:

    einen Erhalter von Identifizierungsinformation zum Erhalten von Identifizierungsinformation zum Identifizieren der biologischen Probe;
    ein Zuordnungsinformations-Speicher zum Speichern von Zuordnungsinformation, die eine Zuordnung des Patienten zu der Identifizierungsinformation darstellt; und
    Bestimmungsmittel zum Bestimmen, ob der Patient die vorbestimmte Zuordnung aufweist oder nicht, basierend auf der Identifizierungsinformation, die von dem Erhalter von Identifizierungsinformation erhalten wurde, und der in dem Zuordnungsinformations-Speicher gespeicherten Zuordnungsinformation;
    wobei der Erhalter von charakteristischer Information die charakteristische Information basierend auf der ersten Erhaltungsbedingung erhält, wenn das Bestimmungsmittel bestimmt hat, dass der Patient die vorbestimmte Zuordnung nicht aufweist, und die charakteristische Information basierend auf der zweiten Erhaltungsbedingung erhält, wenn das Bestimmungsmittel bestimmt hat, dass der Patient die vorbestimmte Zuordnung aufweist.

9.  Analysegerät für biologische Proben nach Anspruch 7 oder 8, weiter umfassend
    Anweisungsinformations-Empfangsmittel zum Empfangen von Anweisungsinformation, die die Anweisung zum Erhalten der charakteristischen Information basierend auf der zweiten Erhaltungsbedingung darstellt,
    wobei der Erhalter von charakteristischer Information die charakteristische Information basierend auf der zweiten Erhaltungsbedingung erhält, wenn das Anweisungsinformations-Empfangsmittel die Anweisungsinformation empfangen hat.

10. Analysegerät für biologische Proben nach einem der Ansprüche 1 bis 9, wobei
    ein Patient, der die vorbestimmte Zuordnung aufweist, ein Kind ist, und ein Patient, der die vorbestimmte Zuordnung nicht aufweist, ein Erwachsener ist.

11. Analysegerät für biologische Proben nach Anspruch 10, wobei der Erhalter von charakteristischer Information umfasst:

    einen Probenvorbereitungsabschnitt zum Vorbereiten einer Messprobe aus der biologischen Probe und einer Färbelösung;

einen Detektionsabschnitt für fluoreszierendes Licht zum Bestrahlen der Messprobe mit Licht und Detektieren von fluoreszierendem Licht, das von der Messprobe emittiert wird; und

eine Detektionssteuerung zum Steuern des Detektionsabschnitts, um das fluoreszierende Licht bei einer Detektionsempfindlichkeit zu detektieren, die für eine biologische Probe eines Erwachsenen geeignet ist, wenn der Patient ein Erwachsener ist, und um das fluoreszierende Licht bei einer Detektionsempfindlichkeit zu detektieren, die für eine biologische Probe eines Kindes geeignet ist, wenn der Patient ein Kind ist.

12. Analysegerät für biologische Proben nach Anspruch 10, wobei der Erhalter von charakteristischer Information umfasst:

einen Probenvorbereitungsabschnitt zum Vorbereiten einer Messprobe aus der biologischen Probe und einer Färbelösung;

einen Detektionsabschnitt für fluoreszierendes Licht zum Bestrahlen der Messprobe mit Licht und Detektieren von fluoreszierendem Licht, das von der Messprobe emittiert wird; und

eine Probenvorbereitungssteuerung zum Steuern des Probenvorbereitungsabschnitts, um eine Messprobe mit der Färbelösung in einer Menge vorzubereiten, die für eine biologische Probe eines Erwachsenen geeignet ist, wenn der Patient ein Erwachsener ist, und um eine Messprobe mit der Färbelösung in einer Menge vorzubereiten, die für die biologische Probe eines Kindes geeignet ist, wenn der Patient ein Kind ist.

13. Analysegerät für biologische Proben nach einem der Ansprüche 1 bis 12, wobei der Erhalter von charakteristischer Information die charakteristische Information von Leukozyten in der biologischen Probe erhält.

14. Analysegerät für biologische Proben nach einem der Ansprüche 1 bis 13, weiter umfassend ein Anzeigenteil,

wobei der Verarbeitungsabschnitt konfiguriert ist, um Vorgänge durchzuführen, die umfassen:

m) Erzeugen von Verteilungsdiagrammdaten, um ein Verteilungsdiagramm, das einen Verteilungszustand von Komponenten in der biologischen Probe, zu zeigen, basierend auf der charakteristischen Information, die von dem Erhalter von charakteristischer Information erhalten wurde; und

n) Steuern des Anzeigenteils, um das Verteilungsdiagramm anzuzeigen.

15. Computerprogrammprodukt, um einen Computer in die Lage zu versetzen, ein Analysegerät für biologische Proben zu steuern, umfassend:

ein computerlesbares Medium, und

Software-Anweisungen auf dem computerlesbaren Medium, um den Computer in die Lage zu versetzen, vorbestimmte Vorgänge durchzuführen, die umfassen:

a) Steuern des Analysegeräts für biologische Proben, um eine Intensität von fluoreszierendem Licht als charakteristische Information, die einen Grad der Färbung einer in einer biologischen Probe eines Patienten enthaltenen Blutzelle darstellt, zu erhalten;

b) Analysieren der charakteristischen Information ohne Verschieben der charakteristischen Information zum Analysieren einer biologischen Probe eines Patienten, der keine vorbestimmte Zuordnung aufweist; und

c) Analysieren der charakteristischen Information mit Verschieben der charakteristischen Information zum Analysieren einer biologischen Probe eines Patienten, der die vorbestimmte Zuordnung aufweist;

wobei ein Patient, der die vorbestimmte Zuordnung aufweist, ein Kind ist, und ein Patient, der die vorbestimmte Zuordnung nicht aufweist, ein Erwachsener ist.

**Revendications**

1. Analyseur d'échantillon biologique comprenant :

un dispositif d'obtention d'informations caractéristiques pour obtenir une intensité de lumière fluorescente comme informations caractéristiques représentant un degré de coloration d'une cellule sanguine contenue dans un échantillon biologique d'un patient ;

un processeur ; et

une mémoire stockant des instructions de logiciel qui est à même de permettre au processeur d'effectuer des opérations comprenant :

(a) une analyse des informations caractéristiques sans déplacer les informations caractéristiques pour analyser un échantillon biologique d'un patient qui n'a pas d'attribution prédéterminée ; et

(b) une analyse des informations caractéristiques avec déplacement des informations caractéristiques pour analyser un échantillon biologique d'un patient qui a l'attribution prédéterminée ;

dans lequel un patient qui a l'attribution prédéterminée est un enfant et un patient qui n'a pas l'attribution prédéterminée est un adulte.

2. Analyseur d'échantillon biologique selon la revendication 1,

dans lequel l'opération (a) comprend des opérations comprenant :

(c) une génération, sur la base de la première condition, de premières données de classification pour classifier des composants de l'échantillon biologique à partir des informations caractéristiques obtenues par le dispositif d'obtention d'informations caractéristiques ; et

(d) une classification des composants de l'échantillon biologique en une pluralité de composants sur la base d'une condition de classification prédéterminée et des premières données de classification ; et

dans lequel l'opération (b) comprend des opérations comprenant :

(e) une génération, sur la base de la seconde condition, de secondes données de classification pour classifier les composants de l'échantillon biologique à partir des informations caractéristiques obtenues par le dispositif d'obtention d'informations caractéristiques ; et

(f) une classification des composants de l'échantillon biologique en une pluralité de composants sur la base de la condition de classification prédéterminée et des secondes données de classification.

3. Analyseur d'échantillon biologique selon la revendication 1 ou 2,

dans lequel l'opération (a) comprend des opérations comprenant :

(g) une génération de données de classification pour classifier des composants de l'échantillon biologique à partir des informations caractéristiques obtenues par le dispositif d'obtention d'informations caractéristiques ; et

(h) une classification des composants de l'échantillon biologique en une pluralité de types de composants sur la base des données de classification et de la première condition ; et

dans lequel l'opération (b) comprend des opérations comprenant :

(i) une génération des données de classification ; et

(j) une classification des composants de l'échantillon biologique en une pluralité de types de composants sur la base des données de classification et de la seconde condition.

4. Analyseur d'échantillon biologique selon l'une quelconque des revendications 1 à 3,

dans lequel l'instruction de logiciel est à même de permettre au processeur d'effectuer une opération visant à :

(k) déterminer si le patient a l'attribution prédéterminée ou non; et

dans lequel l'instruction de logiciel est à même de permettre au processeur d'effectuer l'opération (a) lorsqu'il est déterminé que le patient n'a pas l'attribution prédéterminée dans l'opération (k) et est à même de permettre au processeur d'effectuer l'opération (b) lorsqu'il est déterminé que le patient a l'attribution prédéterminée dans l'opération (k).

5. Analyseur d'échantillon biologique selon la revendication 4, comprenant en outre :

un dispositif d'obtention d'informations d'identification pour obtenir des informations d'identification afin d'identifier l'échantillon biologique,

dans lequel
la mémoire est configurée pour stocker des informations d'attributs représentant l'attribution du patient avec les informations d'identification ;
l'instruction de logiciel est à même de permettre au processeur d'effectuer l'opération (k) sur la base des informations d'identification obtenues par le dispositif d'obtention d'informations d'identification et des informations d'attributs dans la mémoire.

6. Analyseur d'échantillon biologique selon l'une quelconque des revendications 1 à 5,
dans lequel l'instruction de logiciel est à même de permettre au processeur d'effectuer une opération visant à :

(l) recevoir des informations d'instructions représentant une instruction pour analyser des informations caractéristiques sur la base de la seconde condition correspondant à l'attribut prédéterminé ; et

dans lequel l'instruction de logiciel est à même de permettre au processeur d'effectuer l'opération (b) lorsque les informations d'instruction ont été reçues dans l'opération (l).

7. Analyseur d'échantillon biologique selon la revendication 1, comprenant :

une section de traitement pour exécuter une opération afin d'analyser les informations caractéristiques obtenues par le dispositif d'obtention d'informations caractéristiques.

8. Analyseur d'échantillon biologique selon la revendication 7, comprenant en outre :

un dispositif d'obtention d'informations d'identification pour obtenir des informations d'identification afin d'identifier l'échantillon biologique ;
une mémoire d'informations d'attributs pour stocker des informations d'attributs représentant l'attribution du patient avec les informations d'identification ; et
des moyens de détermination pour déterminer si le patient a ou non l'attribution prédéterminée sur la base des informations d'identification obtenues par le dispositif d'obtention d'informations d'identification et des informations d'attributs stockées dans la mémoire d'informations d'attributs ;
dans lequel le dispositif d'obtention d'informations caractéristiques obtient les informations caractéristiques sur la base de la première condition d'obtention lorsque les moyens de détermination ont déterminé que le patient n'a pas l'attribut prédéterminé et obtient des informations caractéristiques sur la base de la seconde condition d'obtention lorsque les moyens de détermination ont déterminé que le patient a l'attribut prédéterminé.

9. Analyseur d'échantillon biologique selon la revendication 7 ou 8, comprenant en outre :

des moyens récepteurs d'informations d'instruction pour recevoir des informations d'instruction représentant une instruction pour obtenir les informations caractéristiques sur la base de la seconde condition d'obtention,
dans lequel le dispositif d'obtention d'informations caractéristiques obtient les informations caractéristiques sur la base de la seconde condition d'obtention lorsque les moyens de réception d'informations d'instruction ont reçu les informations d'instruction.

10. Analyseur d'échantillon biologique selon l'une quelconque des revendications 1 à 9, dans lequel :

un patient qui a l'attribution prédéterminée est un enfant et un patient qui n'a pas l'attribution prédéterminée est un adulte.

11. Analyseur d'échantillon biologique selon la revendication 10, dans lequel :

le dispositif d'obtention d'informations caractéristiques comprend :

une section de préparation d'échantillon pour préparer un échantillon de mesure à partir de l'échantillon biologique et une solution de coloration ;
une section de détection de lumière fluorescente pour irradier l'échantillon de mesure par de la lumière et détecter la lumière fluorescente émise par l'échantillon de mesure ; et
un régulateur de détection pour commander la section de détection afin de détecter la lumière fluorescente à une sensibilité de détection convenant à un échantillon biologique d'un adulte lorsque le patient est un

EP 2 105 724 B1

adulte et à détecter la lumière fluorescente à une sensibilité de détection convenant à un échantillon biologique d'un enfant lorsque le patient est un enfant.

**12.** Analyseur d'échantillon biologique selon la revendication 10, dans lequel :

le dispositif d'obtention d'informations caractéristiques comprend :

une section de préparation d'échantillon pour préparer un échantillon de mesure à partir de l'échantillon biologique et une solution de coloration ;
une section de détection de lumière fluorescente pour irradier l'échantillon de mesure par de la lumière et détecter la lumière fluorescente émise par l'échantillon de mesure ; et
un régulateur de préparation d'échantillon pour commander la section de préparation d'échantillon afin de préparer un échantillon de mesure avec la solution de coloration en quantité convenant à un échantillon biologique d'un adulte lorsque le patient est un adulte et de préparer un échantillon de mesure avec la solution de coloration en quantité convenant à un échantillon biologique d'un enfant lorsque le patient est un enfant.

**13.** Analyseur d'échantillon biologique selon l'une quelconque des revendications 1 à 12, dans lequel :

le dispositif d'obtention d'informations caractéristiques obtient les informations caractéristiques de leucocytes dans l'échantillon biologique.

**14.** Analyseur d'échantillon biologique selon l'une quelconque des revendications 1 à 13, comprenant en outre :

une partie d'affichage,
dans lequel la section de traitement est configurée pour effectuer des opérations comprenant :

(m) une génération de données de diagramme de distribution pour représenter un diagramme de distribution représentant l'état de distribution de composants de l'échantillon biologique sur la base des informations caractéristiques obtenues par le dispositif d'obtention d'informations caractéristiques ; et
(n) une commande de la partie d'affichage de manière à afficher le diagramme de distribution.

**15.** Produit de programme informatique pour permettre à un ordinateur de commander un analyseur d'échantillon biologique, comprenant :

un support lisible par ordinateur et
des instructions de logiciel, sur le support lisible par ordinateur, pour permettre à l'ordinateur d'effectuer des opérations prédéterminées comprenant :

(a) une commande de l'analyseur d'échantillon biologique de manière à obtenir une intensité de lumière fluorescente comme informations caractéristiques représentant un degré de coloration d'une cellule sanguine contenue dans un échantillon biologique d'un patient ;
(b) une analyse des informations caractéristiques sans déplacement des informations caractéristiques pour analyser un échantillon biologique d'un patient qui n'a pas une attribution prédéterminée ; et
(c) une analyse des informations caractéristiques avec déplacement des informations caractéristiques pour analyser un échantillon biologique d'un patient qui a l'attribution prédéterminée ;

dans lequel un patient qui a l'attribution prédéterminée est un enfant et un patient qui n'a pas l'attribution prédéterminée est un adulte.

Fig. 1

Fig. 2

Fig. 3

Sheath fluid

Staining solution

41

41c

Reaction chamber

5

41b

Sampling valve

Reagent

41a

# Fig. 4

EP 2 105 724 B1

# Fig. 5

2

Operation and display device

21
C P U

23
Memory device

22
R A M

232
Patient information memory device

24
Input device

231
Computer program

25
Display device

27
Communication interface

26
Output device

Measuring device 1

28

# Fig. 6

Patient information memory device — 232

| Patient ID | Sample ID | Sex information | Age information | Disease information | Diagnostic information |
|---|---|---|---|---|---|
| ××× | ×××× | ×× | ×× | ×××× | ××× |

EP 2 105 724 B1

# Fig. 7

Fig. 8

EP 2 105 724 B1

# Fig. 9

Measuring device 1 | Operation and display device 2

**Measuring device 1**

( START )

↓ S914
| Initialize |

↓

S915
◇ Measurement start instruction information received? ◇ — NO

↓ YES S916
| Obtain identification information(sample ID) |

↓ S917
| Send sample ID |

↓

S918
◇ Patient information received? ◇ — NO

↓ YES S919
| Measure |

↓ S920
| Send measurement data |

↓

S921
◇ Shutdown instruction information received? ◇ — NO

↓ YES
S922
| Execute shutdown |

↓

( END )

**Operation and display device 2**

( START )

↓ S901
| Initialize |

↓ S902
| Display menu screen |

↓

S903
◇ Measurement start instruction received? ◇ NO

↓ YES S904
| Send instruction information to start measurement |

↓

S905
◇ Identification information received? ◇ NO

↓ YES S906
| Obtain patient information |

↓ S907
| Send patient information |

↓

S908
◇ Measurement data received? ◇ NO

↓ YES S909
| Analysis process |

↓

S910
◇ Reanalysis instruction received? ◇ NO

↓ YES S911
| Reanalysis process |

↓

S912
◇ Shutdown instruction received? ◇ NO

↓ YES S913
| Send shutdown instruction information |

↓

( END )

28

# Fig. 10

```
        ( Analysis process )
                  |                S1001
                  v
   Generate and store the
   first classification data

                  |                S1002
                  v
   Generate and store the
   second classification data

                  |                S1003
                  v
   Classification process
   using first classification
   data

                  |                S1004
                  v
        Counting process

                  |                S1005
                  v
   Store the counting result

                  |                S1006
                  v
   Display the
   classification result

                  |
                  v
           ( Return )
```

# Fig. 11

9 $\xrightarrow{\times 1.2}$ 10

10 $\xrightarrow{\times 1.2}$ 12

11 $\xrightarrow{\times 1.2}$ 13

12 $\xrightarrow{\times 1.2}$ 14

13 $\xrightarrow{\times 1.2}$ 15

# Fig. 12

```
        ( Reanalysis process )
                  |
                  v          S1201
             / analysis based on \
    YES    <    child blood?      >
     |       \                   /
     |              | NO
     v  S1202        v          S1203
┌──────────────────┐  ┌──────────────────────┐
│ Read second      │  │ Read first           │
│ classification   │  │ classification       │
│ data             │  │ data                 │
└──────────────────┘  └──────────────────────┘
     |                         |
     └─────────────────────────┤
                               v          S1204
              ┌──────────────────────────────┐
              │ Classification process       │
              │ based on the read            │
              │ classification data          │
              └──────────────────────────────┘
                               v          S1205
              ┌──────────────────────────────┐
              │ Counting process             │
              └──────────────────────────────┘
                               v          S1206
              ┌──────────────────────────────┐
              │ Store cell counts for        │
              │ lymphocytes, monocytes,      │
              │ eosinophils, neutrophils and │
              │ basophils                    │
              └──────────────────────────────┘
                               v          S1207
              ┌──────────────────────────────┐
              │ Display the classification result │
              └──────────────────────────────┘
                               v
                        ( Return )
```

# Fig. 13

Measuring device 1

START

S1313
Initialize

S1314
Measurement start information instruction received?
NO
YES S1315

Obtain identification information(sample ID)

S1316
Send sample ID

S1317
Patient information received?
NO
YES

S1318
Child blood?
NO
YES S1319

S1320
Measurement for adult blood

Measurement for child blood

S1321
Send measurement data

S1322
Shutdown instruction information received?
NO
YES

S1323
Execute shutdown

END

Operation and display device 2

START

S1301
Initialize

S1302
Display menu screen

S1303
Measurement start instruction received?
NO
YES S1304

Send instruction information to start measurement

S1305
Identification information received?
NO
YES S1306

Obtain patient information

S1307
Send patient information

S1308
Measurement data received?
NO
YES S1309

Analysis process

S1310
Display analysis result

S1311
Shutdown instruction received?
NO
YES

S1312
Send shutdown instruction information

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6391263 B
- JP 2003083960 A
- US 5555196 A